# EUROPEAN PATENT APPLICATION

(11) **EP 1 380 796 A2**
(43) Date of publication of application: **14.01.2004**
(21) Application number: 03254226.8
(22) Date of filing: 03.07.2003
(51) Int. Cl.: F23K 5/16, F23K 5/06, F23K 5/04, F02C 7/228, F02C 9/26

(54) **Fuel system**

(30) Priority: 11.07.2002 GB 0216043
(71) Applicant: Goodrich Control Systems Limited, Luton, Bedfordshire LU1 3LU (GB)
(72) Inventor: Bickley, Daniel James, Hall Green, Birmingham B28 OAX (GB)
(74) Representative: Carpenter, David

(57) **Abstract**

A fuel system of a staged combustion engine comprising primary and secondary burners (22, 24), the fuel system comprising; a metering valve arrangement (14) for regulating fuel flow from a pump to the engine, a pressure raising shut off valve arrangement (16) for controlling the supply of metered fuel to primary and secondary delivery lines (18, 20) for communication with the primary and secondary burners (22, 24) respectively, wherein the pressure raising shut off valve arrangement is operable between an open position in which fuel flow is permitted to both the primary and the secondary burners, and a closed position in which fuel flow through the pressure raising valve arrangement to the primary and secondary burners is prevented, and, a start valve means (113) provided with by-pass flow means (115, 121) which is operable to permit an initial by-pass flow of fuel to the primary burners (22) upon engine start-up when the pressure raising shut of valve arrangement (16) is in the closed position.

## Description

### Technical Field

The invention relates to fuel system for a combustion engine having two or more sets of burners. The invention finds particular advantage in a staged combustion engine of an aircraft.

### Background Art

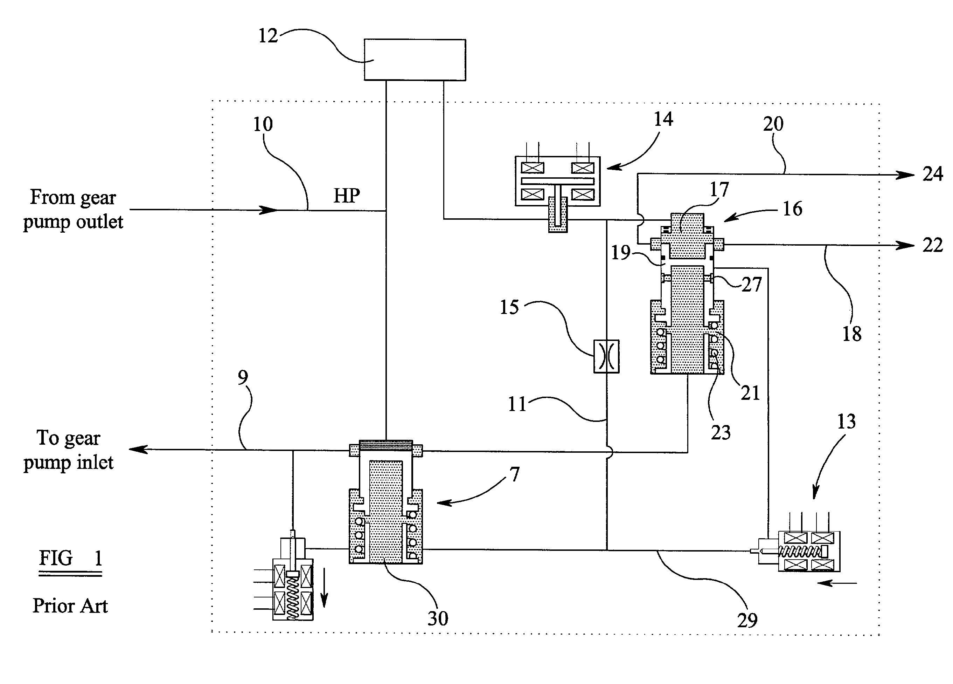

A known fuel system in the form of a fuel metering unit for a staged combustion engine is shown in Figure 1. The fuel system includes a gear pump (not shown), which delivers fuel through an inlet flow line 10 to a flow meter 12 and through a metering servo valve arrangement 14 to a pressure raising shut-off valve arrangement (PRSOV) 16. The metering servo valve arrangement 14 is provided with a pressure drop spill valve (PDSV) 7 which is sensitive to fuel pressure downstream of the metering valve 14 and which spills fuel back from the upstream side of the metering valve 14 through a return line 9 to the gear pump inlet so as to maintain a substantially constant pressure drop across the metering valve 14. By maintaining a fixed pressure drop across the metering valve 14, the fuel flow rate to the PRSOV 16 can be controlled for any given position of the metering valve 14.

The PRSOV 16 includes an inlet chamber 17 and a pressure raising shut off valve member 19 which is exposed, at a first end, to fuel pressure in the inlet chamber 17 and, at a second end, to fuel pressure within a reference chamber 21 housing a PRSOV spring 23. The PRSOV 16 is arranged to deliver fuel through primary and secondary outlet ports (not shown in Figure 1) into primary and secondary delivery lines 18, 20 in communication with a respective set of primary and secondary engine burners 22, 24. The PRSOV 16 is operable to ensure fuel is only supplied to the burners 22, 24 when fuel flow through the valve is of sufficiently high pressure, and can be closed at any time, on demand, if it is required to shut-off the fuel supply to the engine.

The system is further provided with an electromagnetic start valve 13 which is energised upon start-up to initiate operation of the pressure drop spill valve (PDSV) 7 so as to set the required pressure drop across the metering valve 14. Prior to engine start-up, the start valve 13 is open and a reference supply of low pressure fuel is delivered through the PRSOV 16, through a flow line 29 to the reference chamber 30 of the PDSV. To initiate fuelling, the start valve 13 is closed and the reference supply of fuel is derived from a position downstream of the metering valve 14 and upstream of the PRSOV 16, flowing through a restricted spill line 11 to the flow line 29 and into the reference chamber 30. As pressure in the reference chamber 30 increases, the PDSV 7 is urged towards its closed position so as to maintain a set pressure across the metering valve 14. The PRSOV 16 is caused to open, as described further below, closing the low pressure connection to the start valve 13.

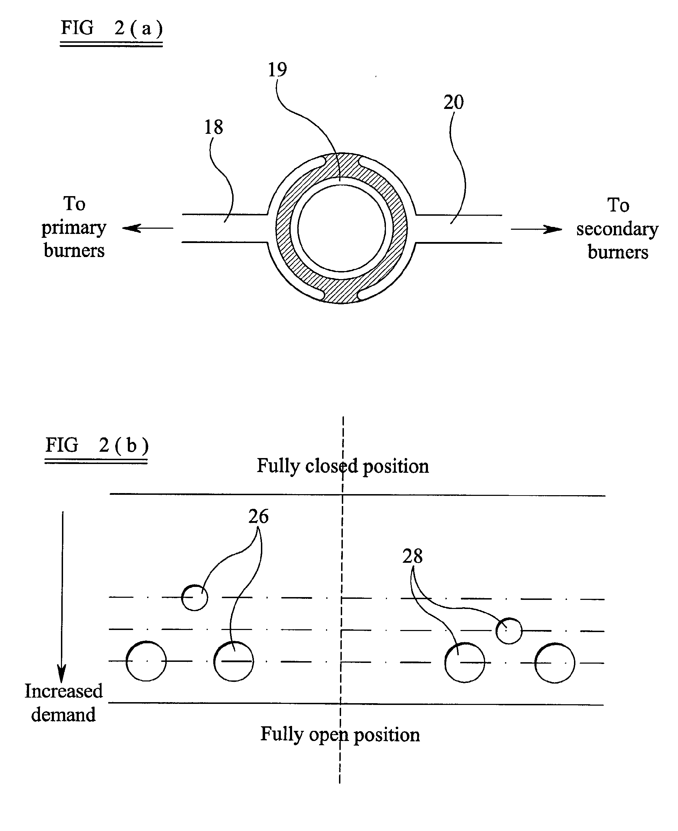

The PRSOV 16 is shown in further detail in Figure 2 which illustrates (a) a top view of the PRSOV 16 and (b) a development view of the pressure raising shut off valve member 19. The PRSOV 16 is provided with primary and secondary outlet ports 26, 28 respectively in its side wall, which are profiled to provide staged delivery of fuel to the primary and secondary burners 22, 24 upon engine start-up. A further set of ports 27 is provided (as shown in Figure 1), which communicate with the reference chamber 21 and which are brought into communication with the flow line 29 when the PRSOV 16 is closed.

As can be seen in Figure 2(b), as fuel demand increases upon start-up and fuel pressure in the inlet chamber 17 increases, the valve member 19 is urged in a downward direction (in the illustration shown) against the biasing force of the PRSOV spring 23 and low pressure fuel within the reference chamber 21. Initially, an uppermost one of the primary outlets will be uncovered to permit fuel flow from the inlet chamber 17, through the side wall of the pressure raising shut off valve 16 and into the primary delivery line 18 to the primary burners 22. As demand increases further and the valve member 19 is moved further against the spring force, an uppermost one of the secondary outlets 28 is uncovered to permit fuel flow to the secondary burners 24 until eventually, at full demand, both sets of primary and secondary outlets 26, 28 are fully uncovered.

In some flight conditions, for example at high altitude idling, the fuel flow rate required by the engine is similar to that required at start-up. In circumstances in which the demanded fuel flow is reduced, the fuel flow rate delivered to the inlet chamber 17 is reduced and the pressure raising shut off valve member 19 is urged, by means of the spring force, into a position in which only an uppermost one of the primary outlets 26 is uncovered and flow to the secondary burners 28 is prevented. It is an undesirable consequence of this that any residual fuel in the secondary delivery line 20 is subjected to high engine temperatures, giving rise to carburisation of static fuel and potential blockage of the delivery line 20.

It is an object of the present invention to provide a fuel system generally of the aforementioned type which addresses this problem.

### Disclosure of Invention

According to a first aspect of the present invention, there is provided a fuel system of a staged combustion engine comprising primary and secondary burners, the fuel system comprising;
a metering valve arrangement for regulating fuel flow from a pump to the engine,
a pressure raising shut off valve arrangement for controlling the supply of metered fuel to primary and secondary delivery lines for communication with the primary and secondary burners respectively, wherein the pressure raising shut off valve arrangement is operable between an open position in which fuel flow is permitted to both the primary and the secondary burners, and a closed position in which fuel flow through the pressure raising valve arrangement to the primary and secondary burners is prevented,
and a start valve means provided with by-pass flow means which is operable to permit an initial by-pass flow of fuel to the primary burners upon engine start-up when the pressure raising shut of valve arrangement is in the closed position.

The present invention provides the advantage that a by-pass flow of fuel is supplied through the by-pass flow means to initiate fuelling of the primary burners, and not through the pressure raising shut off valve arrangement. The system can therefore be configured such that in all flight conditions a delivery flow of fuel is supplied to both the primary and secondary delivery lines through the pressure raising shut off valve arrangement. Thus, the risk of carburisation of residual fuel within the secondary delivery line is avoided.

In a preferred embodiment, the start valve means include a by-pass valve member and a by-pass flow line which communicates with the primary delivery line, whereby the by-pass valve member is movable between a first position, in which fuel flow through the by-pass line is substantially prevented, and a second position in which fuel flow through the by-pass line is permitted.

In a further preferred embodiment, the by-pass valve member has first and second seats which it engages when in the first and second position respectively.

Preferably, the by-pass flow of fuel is derived from a flow line which communicates with a point downstream of the metering valve arrangement and upstream of the pressure raising shut of valve arrangement.

In a preferred embodiment, the start valve means includes an electromagnetic actuator, the by-pass valve member being arranged such that energisation of the electromagnetic actuator moves the by-pass valve member into the second position to initiate fuelling of the primary burners.

The flow line is preferably provided with a restriction, of relatively large flow area. More preferably, the flow line is also arranged to supply a reference supply of fuel to a pressure drop spill valve arrangement following engine start-up so as to maintain a substantially constant pressure difference across the metering valve arrangement.

The system may also be provided with a shut-down valve which is actuable between a closed state during engine operation and an open state upon engine shutdown.

In an alternative embodiment, a region of the flow line through which the reference supply of fuel flows to the pressure drop spill valve arrangement may be provided with an additional restriction, thereby to cause relatively rapid closure of the pressure raising shut off valve arrangement upon engine shut-down.

By providing the additional restriction in this region of the flow line, when the shut-down valve is open upon engine shut-down, fuel pressure in the pressure drop spill valve reference chamber is reduced to low pressure more quickly, thereby resulting in rapid closure of the pressure raising shut off valve arrangement.

### Brief Description of the Drawings

The invention will now be described, by way of example only, with reference to the accompanying drawings in which:
Figure 1 is a schematic illustration of a known fuel system for a staged combustion engine,
Figure 2(a) is a top view of a known pressure raising shut off valve forming part of the fuel system in Figure 1, and Figure 2(b) is a developed view of a part of the pressure raising shut off valve,
Figure 3 is a schematic illustration of a fuel system in accordance with a first embodiment of the invention,
Figure 4 is a developed view of a part of a pressure raising shut off valve of the fuel system in Figure 3, and
Figure 5 is a schematic illustration of an alternative fuel system to that shown in Figure 3.

### Preferred Mode for Carrying Out the Invention

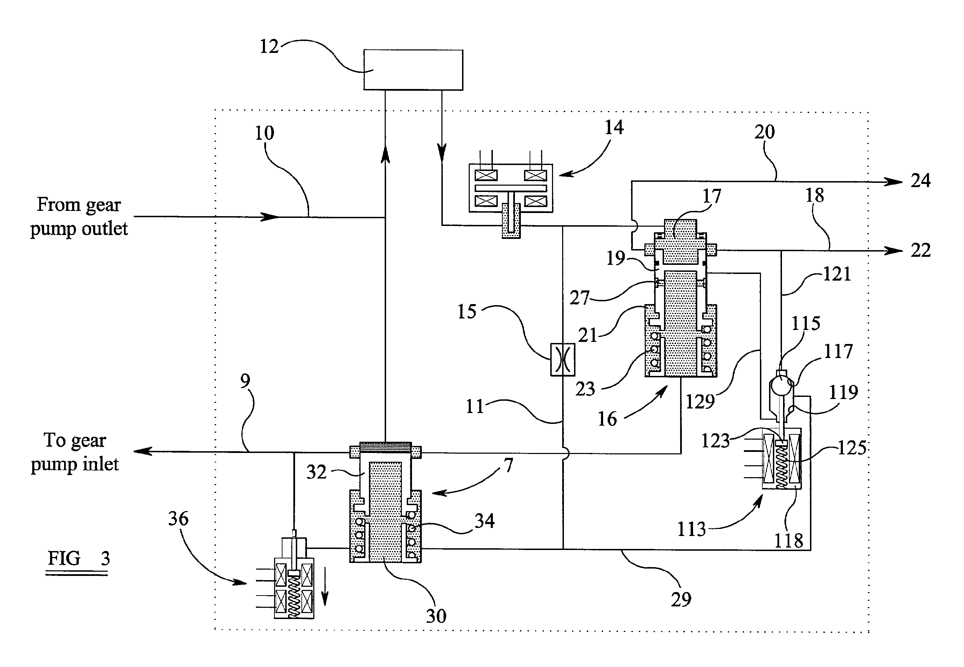

Referring to Figure 3, the fuel system of the present invention is generally of the type shown in Figure 1, and similar parts to those described previously are referred to with like reference numerals. Various aspects of the fuel system will now be described in further detail.

The PDSV 7 includes a PDSV member 32 which is urged towards a closed position by means of a PDSV spring 34 and fuel pressure within a reference chamber 30 of the PDSV 7, in which position the flow of fuel from the inlet line 10 through the return line 9 to the gear pump inlet is reduced. An electromagnetic shutdown valve 36 is arranged to control communication between the reference chamber 30 of the PDSV 7 and the return line 9, and is operable between an open position, which it adopts at engine shutdown, and a closed position (as shown in Figure 3), which it adopts in use, in a conventional manner.

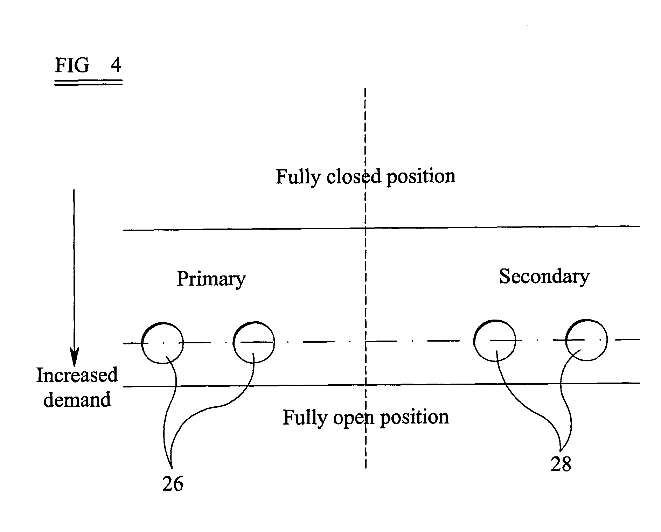

The PRSOV 16 also includes primary and secondary outlet ports 26, 28 which take the form shown in Figure 4, wherein the primary outlet ports 26 are located at substantially the same axial position as the secondary outlet ports 28 on the PDSOV body.

A further flow line 129 provides a means of communication between the further ports 27 on the PRSOV 16 and the flow line 29 during certain operating conditions. The flow line 29 is provided with an electromagnetic start valve 113, but the system differs from the conventional system in Figure 1 in that the start valve 113 provides a by-pass flow means comprising a by-pass valve member 115 which is operable to control fuel flow through a by-pass flow line 121 to the primary delivery line 18. The by-pass valve member 115 forms part of the start valve 113 and is movable between a closed position, in which it engages a first seating 117 (as shown in Figure 3), and an open position in which it engages a second seating 119, by energising and de-energising a winding of an electromagnetic actuator 118. The by-pass valve member 115 is coupled to an armature 123 which is urged, by means of an actuator spring 125, towards the closed position in which the by-pass valve member 115 is seated against the first seating 117.

When the winding is energised, the by-pass valve member 115 is urged into the open position, against the force of the actuator spring 125, in which it engages the second seating 119 to open communication between the flow line 29 and the primary delivery line 18. Thus, fuel is able to flow from a point downstream of the metering valve arrangement 14, through the line 11, restriction 15, a region of the flow line 29 and through the by-pass flow line 121 to the primary delivery line 18, thus permitting a "by-pass" flow of fuel to the primary burners 22 even in circumstances in which the PRSOV 16 is closed. It is the by-pass valve means of the present invention which provides a particular advantage, as described further below. In such circumstances fuel is also able to flow from the position downstream of the metering valve arrangement 14, through a region of the flow line 29 to the reference chamber 30 of the PDSV 7.

When the winding of the actuator 118 is de-energised, the by-pass valve member 115 is moved into the closed position, away from the second seating 119 into engagement with the first seating 117, so that flow through the flow line 29 to the primary delivery line 18 is prevented. With the PRSOV 16 closed, the further ports 27 in the pressure raising shut off valve member 19 align with the flow line 29 to permit fuel at low pressure within the PRSOV reference chamber 21 to flow through the line 129 in communication with the flow line 29, past the by-pass valve member 115 into the PDSV reference chamber 30 via flow line 29.

Operation of the fuel system from engine start-up to engine shut-down will now be described in further detail. Initially upon engine start-up with the high pressure pump running, the pressure raising valve member 19 will be urged into its closed position by the force due to the spring 23 as the pressure of fuel within the inlet chamber 17 is relatively low. The start valve 113 is initially in its de-energised state, in which the by-pass valve member 115 engages the first seating 117, and the further ports 27 are aligned with the flow line 129. Low pressure fuel within the PRSOV reference chamber 21 is therefore able to flow through the further ports 27, into the line 129 and past the by-pass valve member 115 into the PDSV reference chamber 30 via the flow line 29. The reference chamber 30 is therefore held at low pressure and, hence, the PDSV 7 is urged fully open, against the spring force, by high pressure fuel flowing through the inlet line 10 which returns through the open PDSV 7, to the return line 9 and to the gear pump inlet.

In order to initiate engine start-up, the start valve 113 is energised to move the ball valve 115 out of the closed position, into the open position in which it engages the second seating 119, thereby closing the low pressure connection to the PDSV reference chamber 30 via lines 29, 129 and opening communication between the line 29 and the primary delivery line 18 via the by-pass line 121 and, thus, supplying fuel to the primary burners 22. As fuel delivered through the metering valve arrangement 14 increases with increasing engine speed, fuel pressure within the PDSV reference chamber 30 supplied from the outlet of the metering valve arrangement 14 via the restriction 15, the line 11 and the flow line 29 will rise. Increasing fuel pressure within the reference chamber 30 urges the PDSV member 32 towards its closed position, thereby reducing the proportion of fuel within the inlet line 10 which is spilled back through the return line 9 to low pressure, increasing the fuel pressure supplied to the metering valve 14. Fuel pressure downstream of the metering valve arrangement 14 therefore increases, and fuel pressure within the inlet chamber 17 of the PRSOV 16 is increased.

Initially, the pressure increase in the inlet chamber 17 will be insufficient to urge the pressure raising shut off valve member 19 into a position in which the primary outlets 26 are open, so that the PRSOV remains closed. However, with the start valve 113 energised, a by-pass flow of fuel flows through the flow line 29 past the by-pass valve member 115, into the by-pass line 121 and, hence, into the primary delivery line 18 so as to supply the primary burners 22 with fuel.

It will be appreciated that, compared to the prior art system of Figure 1, pressure increase in the PDSV reference chamber 30 and the inlet chamber 17 of the PRSOV 16 following engine start-up will be slower due to the by-pass flow through the start valve 113 to the primary burners 22, whereas in the known system no flow into the primary delivery line 18 is permitted until the PRSOV 16 has opened.

After energisation of the start valve 113, the fuel pressure downstream of the metering valve 14 and in the inlet chamber 17 of the PRSOV 16 increases as flow through the metering valve arrangement 14 increases, until such time as the pressure raising shut-off valve member 19 is urged out of its closed position against the biasing force of the spring 23. Opening of the primary outlets 26 of the PRSOV 16 will form a flow path in parallel to the by-pass valve 113 and the by-pass line 121. As can be seen from Figure 4, at the same time as the primary outlet ports 26 are opened, the secondary ports 28 are also opened to permit flow through the secondary delivery line 20 to the secondary burners 24.

The inlets (not shown) to the primary burners 22 present a restriction to flow from the primary delivery line 18, and as this increases the by-pass flow past the by-pass valve member 115 into the by-pass line 121 is eased. Thus, there is an increase in pressure within the PDSV reference chamber 30. Once the PRSOV 16 has opened sufficiently to supply the required fuel flow rate to the primary (and secondary) burners, the winding of the actuator 118 may be de-energised, thus allowing the by-pass member 115 to move under the force of the spring 125 and seat against the first seating 117.

With the by-pass flow halted, pressure within the PDSV reference chamber 30 increases, to further close the PDSV member 32 to increase and maintain the pressure drop across the metering valve arrangement 14 to the normal operating pressure drop. Further increases in metered fuel flow will cause further pressure increase within the PRSOV inlet chamber 17. The pressure raising shut off valve member 19 is therefore urged further open, to open the primary outlets 26 and the secondary outlets 28 further, and hence to increase flow through the delivery lines 18, 20 to the burners 22, 24.

In order to stop the flow to the engine, the shut-down valve 36 is energised to open communication between the reference chamber 30 of the PDSV 7 and low pressure, thereby causing fuel pressure within the reference chamber 30 to decrease so that the PDSV member 32 is urged towards the fully open position by fuel flow from the inlet line 10. With the PDSV 7 fully open, fuel flow through the inlet line 10 is returned to the return line 9 and fuel pressure downstream of the metering valve arrangement 14 decreases rapidly. Hence, fuel pressure within the inlet chamber 17 is decreased and the PRSOV will close under the force of the first spring 23.

A problem with known systems, such as that shown in Figure 1, is that for certain flight conditions the fuelling requirements of the engine are similar to those required at start-up, so that in flight the PRSOV 16 is caused to move into a position in which fuel is only supplied to the primary delivery line 18. With the flow to the secondary delivery line 20 cut-off, any residual fuel within the secondary delivery line 20 is subjected to high temperatures, which may cause carburisation of static fuel, potentially resulting in a blockage of the secondary delivery line 24. The requirements to provide both staged fuelling of the primary and secondary delivery lines 18, 20, and to ensure fuel is supplied through the secondary delivery line 20 during all flight conditions, are therefore incompatible with one another in known systems.

The benefit of the present invention is that the fuelling to both the primary and secondary delivery lines 18, 20 occurs during all flight conditions, whilst still permitting staged fuelling upon start-up. Staged fuelling upon start-up is provided by the by-pass flow through the by-pass line 121 to the primary delivery line 18, as this by-pass flow exists even when the PRSOV 16 is fully closed.

The restriction 15 in the line 11 is relatively large (i.e. relatively unrestricted) compared with that in known systems such as that shown in Figure 1, as it is important to ensure sufficient flow reaches the primary burners 22 past the by-pass valve member 115 upon engine start-up.

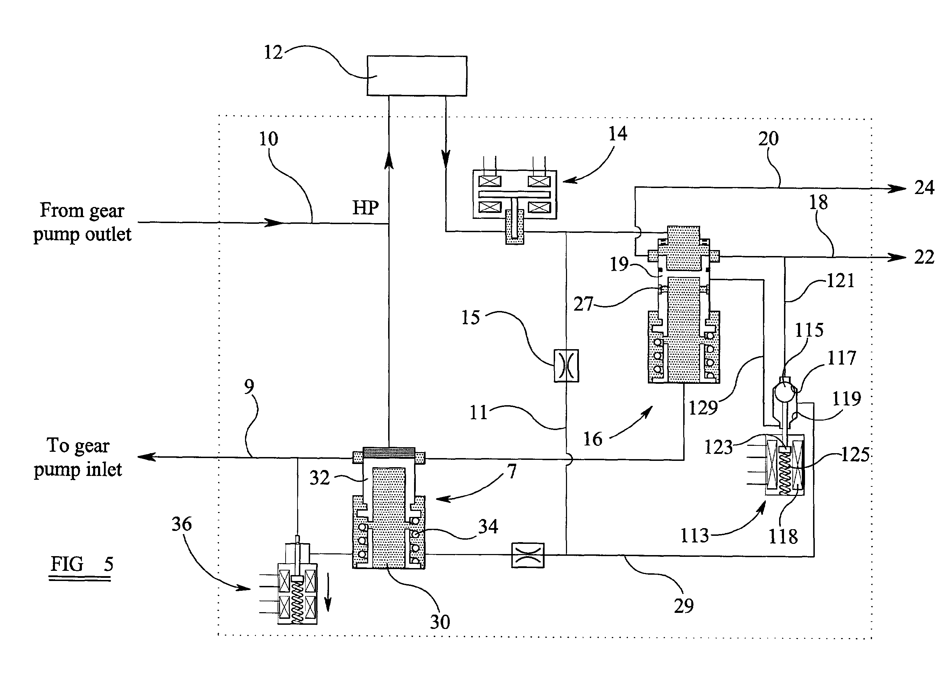

In an alternative embodiment to that shown in Figure 3, Figure 5 shows a generally identical system but in which an additional restriction 128 is provided in the region of the flow line 29 through which the reference supply of fuel flows to the PDSV 7. The restriction 128 is significantly smaller than the restriction 15 and thus allows a reduced fuel flow into the chamber 30 than in the previously described embodiment. The provision of the additional restriction 128 provides the advantage that, when the shut-down valve 36 is opened at engine shut-down, less fuel needs to flow through the shut-down valve 36 and pressure in the PDSV reference chamber 30 is reduced at a faster rate due to the relatively higher flow out of the reference chamber 30 to low pressure compared to the flow into the reference chamber 30. The PRSOV is therefore able to close more quickly and the shut-down valve 36 may be a smaller device.

It will be appreciated that the present invention is also applicable to staged combustion engine systems in which further sets of burners are provided.

## Claims

1. A fuel system of a staged combustion engine comprising primary and secondary burners (22, 24), the fuel system comprising;
a metering valve arrangement (14) for regulating fuel flow from a pump to the engine,
a pressure raising shut off valve arrangement (16) for controlling the supply of metered fuel to primary and secondary delivery lines (18, 20) for communication with the primary and secondary burners (22, 24) respectively, wherein the pressure raising shut off valve arrangement is operable between an open position in which fuel flow is permitted to both the primary and the secondary burners, and a closed position in which fuel flow through the pressure raising valve arrangement to the primary and secondary burners is prevented, and,
a start valve means (113),
the system being **characterised in that** the start valve means (113) is provided with by-pass flow means (115, 121) which is operable to permit an initial by-pass flow of fuel to the primary burners (22) upon engine start-up when the pressure raising shut of valve arrangement (16) is in the closed position.

2. A fuel system of a staged combustion engine as claimed in claim 1 **characterised in that** the start valve means (113) include a by-pass valve member (115) and a by-pass flow line (121) which communicates with the primary delivery line (18), whereby the by-pass valve member is movable between a first position, in which fuel flow through the by-pass line is substantially prevented, and a second position in which fuel flow through the by-pass line is permitted.

3. A fuel system of a staged combustion engine as claimed in claim 2 **characterised in that** the by-pass valve member (115) has first and second seats (117, 119) which it engages when in the first and second position respectively.

4. A fuel system of a staged combustion engine as claimed in any one of the preceding claims **characterised in that** the by-pass flow of fuel is derived from a flow line (11) which communicates with a point downstream of the metering valve arrangement (14) and upstream of the pressure raising shut of valve arrangement (16).

5. A fuel system of a staged combustion engine as claimed in claim 4 **characterised in that** said flow line (11) is also arranged to provide a reference supply of fuel to a pressure drop spill valve arrangement (7) following engine start-up so as to maintain a substantially constant pressure difference across the metering valve arrangement (14).

6. A fuel system of a staged combustion engine as claimed in claim 4 or claim5 **characterised in that** said flow line (11) is provided with a restriction (15), of relatively large flow area.

7. A fuel system of a staged combustion engine as claimed in claim 6 **characterised in that** a region of the flow line (11) through which the reference supply of fuel flows to the pressure drop spill valve arrangement (7) is provided with an additional restriction (128), thereby to cause relatively rapid closure of the pressure raising shut off valve arrangement (16) in engine shut-down.

8. A fuel system of a staged combustion engine as claimed in any one of claims 2 to 7 **characterised in that** the start valve means (113) includes an electromagnetic actuator (118), the by-pass valve member (115) being arranged such that energisation of the electromagnetic actuator moves the by-pass valve member into the second position to initiate fuelling of the primary burners.

9. A fuel system of a staged combustion engine as claimed in any one of the preceding claims **characterised by** a shut-down valve (36) which is actuable between a closed state during engine operation and an open state in engine shutdown.
